# EUROPEAN PATENT APPLICATION

(11) **EP 3 910 707 A1**
(43) Date of publication of application: **17.11.2021**
(21) Application number: 19919790.6
(22) Date of filing: 27.09.2019
(51) Int. Cl.: H01M 4/505, H01M 4/525

(54) **POSITIVE ELECTRODE ACTIVE MATERIAL FOR NON-AQUEOUS ELECTROLYTE SECONDARY BATTERY, POSITIVE ELECTRODE FOR NON-AQUEOUS ELECTROLYTE SECONDARY BATTERY, AND NON-AQUEOUS ELECTROLYTE SECONDARY BATTERY**

(30) Priority: 15.03.2019 US 201962819166 P
(71) Applicant: Basf Toda Battery Materials LLC, Minato-ku, Tokyo 108-0075 (JP); GS Yuasa International Ltd., Kisshoin, Minami-ku, Kyoto-shi, Kyoto 601-8520 (JP)
(72) Inventor: INOUE Taisei, Sanyoonoda-shi, Yamaguchi 756-0847 (JP); NISHIKAWA Daisuke, Sanyoonoda-shi, Yamaguchi 756-0847 (JP); INOUE Katsuya, Kyoto-shi Kyoto 601-8520 (JP)
(74) Representative: Isarpatent
(86) International application number: PCT/JP2019/038365
(87) International publication number: WO 2020/188863

(57) **Abstract**

Provided is a "lithium-excess-type" active material having high initial efficiency. Disclosed is a positive active material for a nonaqueous electrolyte secondary battery containing a lithium transition metal composite oxide. In this positive active material, the lithium transition metal composite oxide has an α-NaFeO₂ structure, a molar ratio Li/Me of Li to a transition metal (Me) is 1 < Li/Me, Ni and Mn are contained as the transition metal (Me), an X-ray diffraction pattern attributable to a space group R3-m is included, and a half-value width of a (101) plane at a Miller index hkl in X-ray diffraction measurement using a CuKa ray is 0.22° or less.

## Description

### TECHNICAL FIELD

The present invention relates to a positive active material for a nonaqueous electrolyte secondary battery, a positive electrode for a nonaqueous electrolyte secondary battery containing the positive active material, and a nonaqueous electrolyte secondary battery including the positive electrode.

### BACKGROUND ART

Heretofore, in a nonaqueous electrolyte secondary battery, as a lithium transition metal composite oxide used for a positive active material, a "LiMeO₂-type" active material (wherein Me is a transition metal) having an α-NaFeO₂-type crystal structure has been examined, and LiCoO₂ has been widely put to practical use. The nonaqueous electrolyte secondary battery using LiCoO₂ as a positive active material has a discharge capacity of about 120 to 130 mAh/g.

Various "LiMeO₂-type" active materials having a larger discharge capacity and excellent charge-discharge cycle performance have been proposed and partially put to practical use. For example, LiNi_{1/2}Mn_{1/2}O₂ and LiCo_{1/3}Ni_{1/3}Mn_{1/3}O₂ have a discharge capacity of 150 to 180 mAh/g.

As the Me, it has been desired to use Mn that is abundant as an earth resource. However, the "LiMeO₂-type" active material in which a molar ratio Mn/Me of Mn to Me is more than 0.5 has a problem that a structural change from an α-NaFeO₂-type to a spinel type occurs with charging, a crystal structure cannot be maintained, and charge-discharge cycle performance is remarkably deteriorated.

Thus, in recent years, with respect to the "LiMeO₂-type" active material as described above, a so-called "lithium-excess-type" active material has been proposed as a lithium transition metal composite oxide, in which a molar ratio Li/Me of lithium to the transition metal (Me) is more than 1, the molar ratio Mn/Me of manganese (Mn) is more than 0.5, and an α-NaFeO₂ structure can be maintained even when charge is performed. This active material can be represented by Li_{1+α}Me₁-_{α}O₂ (α > 0), and studies have been conducted on its composition, crystallinity, powder characteristics, and a relationship between a production method and the like and battery characteristics (see Patent Documents 1 to 4).

Patent Document 1 describes "A positive active material for a nonaqueous electrolyte secondary battery, comprising a lithium transition metal composite oxide having an α-NaFeO₂-type crystal structure, wherein a molar ratio Li/Me of Li and a transition metal (Me) that form the lithium transition metal composite oxide is more than 1.2 and less than 1.5, the transition metal (Me) includes Mn and Ni, the lithium transition metal composite oxide has an X-ray diffraction pattern attributable to a space group P3₁12 or R3-m, a half-value width for a diffraction peak of a (003) plane at a Miller index hkl in X-ray diffraction measurement using a CuKa ray is 0.180 to 0.210°, and a BET specific surface area of the lithium transition metal composite oxide is 2.0 or more and 3.8 m²/g or less." (claim 1) and "The positive active material for a nonaqueous electrolyte secondary battery, according to claim 1 or 2, wherein a ratio of a half-value width for the diffraction peak of the (003) plane to the half-value width for the diffraction peak of a (114) plane or a (104) plane at the Miller index hkl in the X-ray diffraction measurement using the CuKa ray of the lithium transition metal composite oxide is 0.731 or more." (claim 3).

It is further described that "The present inventor ... has found that a "lithium-excess-type" positive active material obtained by mixing a coprecipitation carbonate precursor containing Ni, Mn, and a coprecipitation carbonate precursor containing Co as an optional component, with lithium carbonate and niobium oxide in appropriate amounts and firing the mixture under suitable conditions has a specific surface area that is not too large and appropriate crystallinity, thereby achieving high initial efficiency and high discharge capacity, and suppressing a decrease in capacity during a charge-discharge cycle." (paragraph [0020]).

Patent Document 2 describes "A positive active material for a lithium secondary battery, comprising a lithium transition metal composite oxide having an α-NaFeO₂ structure, wherein in the lithium transition metal composite oxide, a transition metal (Me) includes Co, Ni and Mn, a molar ratio (Li/Me) of Li to the transition metal (Me) is 1 < Li/Me, a molar ratio (Mn/Me) of Mn to the transition metal (Me) is 0.5 < Mn/Me, and Ce is contained." (claim 1) and "The positive active material according to claim 1 or 2, wherein in X-ray diffraction pattern analysis using a CuKa bulb, a half-value width (FWHM) for a diffraction peak attributed to a (104) plane meets 0.269 ≤ FWHM ≤ 0.273." (claim 3).

It is further described that "In Examples 1 to 5 in which the acid treatment was performed by adding Ce ions, the initial efficiency and the discharge capacity retention ratio were higher than those in Comparative Example 1 in which the acid treatment was not performed, Comparative Example 2 in which the sulfuric acid treatment was performed, and Comparative Examples 3 to 9 in which the acid treatment was performed by adding Sn ions or Fe ions. As compared with Comparative Example 10 in which the acid treatment was performed by adding Zr, although there was no particular difference in the discharge capacity retention ratio, the initial efficiency was excellent." (paragraph [0099]).

Patent Document 3 describes "A process for producing a positive active material for a lithium ion secondary battery, comprising the following steps (I), (II) and (III) in this order:
step (I): a step of bringing a lithium-containing composite oxide (I) containing Li element and a transition metal element into contact with a washing liquid and then separating it from the washing liquid to obtain a lithium-containing composite oxide (II),
step (II): a step of bringing the lithium-containing composite oxide (II) into contact with the following composition (1) and composition (2) to obtain a lithium-containing composite oxide (III), and
step (III): a step of heating the lithium-containing composite oxide (III),
composition (1): an aqueous solution containing a monoatomic or polyatomic anion (A) containing at least one element (a) selected from the group consisting of S, P, F and B,
composition (2): an aqueous solution containing a monoatomic or complex cation (M) of at least one metal element (m) selected from the group consisting of Li, Mg, Ca, Sr, Ba, Y, Ti, Zr, Hf, V, Nb, Ta, Cr, Mo, W, Mn, Fe, Co, Ni, Cu, Zn, Al, Ga, In, Sn, Sb, Bi, La, Ce, Pr, Nd, Gd, Dy, Er and Yb." (claim 1) and "The process for producing a positive active material for a lithium ion secondary battery according to any one of claims 1 to 7, wherein the lithium-containing composite oxide (I) contains Li element and at least one transition metal element selected from the group consisting of Ni, Co and Mn, and the molar amount of the Li element is more than 1.2 times the total molar amount of the transition metal element" (claim 8).

It is further described that "As evident from the results in Table 3, in Ex. 1 to 4 and 13 to 20 in which contact with the washing liquid (step (I)) and the coating (steps (II) and (III)) were carried out, and the composition (1) and the composition (2) were used as the coating liquid, excellent initial efficiency and cycle retention are obtained as compared with Reference Example 1 in which neither contact with the washing liquid nor coating was carried out." (paragraph [0099]).

Patent Document 4 describes "A method of producing a positive active material for a lithium ion secondary battery containing a composite oxide (I) containing one or both of Ni and Co, Mn, and Li, a molar amount of Li being more than 1.2 times a total molar amount of Ni, Co, and Mn, the method comprising: a mixing step of mixing the following compound (A) and the following compound (B); a first firing step of firing a mixture obtained in the mixing step at 450 to 700°C in an atmosphere containing oxygen; and a second firing step of firing a fired product obtained in the first firing step at 750 to 1000°C in an atmosphere containing oxygen to obtain the composite oxide (I):
compound (A): carbonate compound, and
compound (B): lithium carbonate." (claim 1) and "The method of producing a positive active material for a lithium ion secondary battery according to any one of claims 1 to 8, wherein in the mixing step, water is added when the compound (A) and the compound (B) are mixed." (claim 9).
It is further described that "Examples 7 to 10 show that the initial efficiency increases when a small amount of water is added in the mixing step." (paragraph [0095]).

### PRIOR ART DOCUMENTS

### PATENT DOCUMENTS

Patent Document 1: JP-A-2016-219278
Patent Document 2: JP-A-2016-126935
Patent Document 3: WO 2015/002065 A
Patent Document 4: JP-A-2015-135800

### SUMMARY OF THE INVENTION

### PROBLEMS TO BE SOLVED BY THE INVENTION

Since the "lithium-excess-type" active material can be regarded as a solid solution of LiMeO₂ and Li₂MnO₃ having a theoretical capacity larger than that of LiMeO₂, a large discharge capacity is expected to be obtained. However, the conventional "lithium-excess-type" active material has a problem of low initial coulombic efficiency (hereinafter, referred to as "initial efficiency"), which is a ratio of a discharge capacity to an initial charge capacity.

An object of the present invention is to provide a positive active material for a nonaqueous electrolyte secondary battery having high initial efficiency, a positive electrode containing the active material, and a nonaqueous electrolyte secondary battery including the positive electrode.

### MEANS FOR SOLVING THE PROBLEMS

One aspect of the present invention is a positive active material for a nonaqueous electrolyte secondary battery containing a lithium transition metal composite oxide, in which the lithium transition metal composite oxide has an α-NaFeO₂ structure, a molar ratio Li/Me of Li to a transition metal (Me) is 1 < Li/Me, Ni and Mn or Ni, Co and Mn are contained as the transition metal (Me), an X-ray diffraction pattern attributable to a space group R3-m is included, and a half-value width for a diffraction peak of a (101) plane at a Miller index hkl in X-ray diffraction measurement using a CuKa ray is 0.22° or less.

Another aspect of the present invention is a positive electrode for a nonaqueous electrolyte secondary battery containing the positive active material.

Still another aspect of the present invention is a nonaqueous electrolyte secondary battery including the positive electrode, a negative electrode, and a nonaqueous electrolyte.

### ADVANTAGES OF THE INVENTION

According to the present invention, it is possible to provide a positive active material for a nonaqueous electrolyte secondary battery having high initial efficiency, a positive electrode containing the active material, and a nonaqueous electrolyte secondary battery including the positive electrode.

### BRIEF DESCRIPTION OF THE DRAWINGS

Fig. 1 is a LiMeO₂-type crystal structure diagram attributed to a space group R-3m (an explanatory diagram of a (101) plane).
Fig. 2 is a graph showing a relationship between a BET specific surface area of a "lithium-excess-type" active material and a 0.1 C discharge capacity.
Fig. 3 is a graph showing a relationship between a half-value width of the (101) plane of the "lithium-excess-type" active material and initial efficiency.
Fig. 4 is a graph showing a relationship between the half-value width of the (101) plane of the "lithium-excess-type" active material and the 0.1 C discharge capacity.
Fig. 5 is a graph showing a relationship between a half-value width of a (003) plane of the "lithium-excess-type" active material and the 0.1 C discharge capacity.
Fig. 6 is a graph showing a relationship between a ratio of the half-value width of the (101) plane to the half-value width of the (003) plane of the "lithium-excess-type" active material and the initial efficiency.
Fig. 7 is a graph showing a relationship between the ratio of the half-value width of the (101) plane to the half-value width of the (003) plane of the "lithium-excess-type" active material and the 0.1 C discharge capacity.
Fig. 8 is an external perspective view showing a nonaqueous electrolyte secondary battery according to an embodiment of the present invention.
Fig. 9 is a conceptual diagram showing an energy storage apparatus including a plurality of the nonaqueous electrolyte secondary batteries according to the embodiment of the present invention.

### MODE FOR CARRYING OUT THE INVENTION

The configuration and operational effects of the present invention will be described together with the technical concept. However, the mechanism of action includes presumptions, and whether it is right or wrong does not limit the present invention. Incidentally, the present invention can be performed in other various forms without deviating from the spirit or main feature thereof. Accordingly, the embodiments and examples given below are merely examples in every way, and they should not be construed as restrictive. Further, variations and modifications falling under the scope equivalent to the claims are all within the scope of the present invention.

An embodiment of the present invention is a positive active material for a nonaqueous electrolyte secondary battery containing a lithium transition metal composite oxide. In this positive active material, the lithium transition metal composite oxide has an α-NaFeO₂ structure, a molar ratio Li/Me of Li to a transition metal (Me) is 1 < Li/Me, Ni and Mn are contained as the transition metal (Me), an X-ray diffraction pattern attributable to a space group R3-m is included, and a half-value width for a diffraction peak of a (101) plane at a Miller index hkl in X-ray diffraction measurement using a CuKa ray is 0.22° or less.

According to an embodiment of the present invention, when a composition of the lithium transition metal composite oxide falls within a specific range, and the half-value width for the diffraction peak of the (101) plane is 0.22° or less, a positive active material having high initial efficiency and a large discharge capacity is obtained. The half-value width for the diffraction peak of the (101) plane may be 0.215° or less, or 0.21° or less.

In an embodiment of the present invention, the lithium transition metal composite oxide may have a molar ratio Li/Me of 1.2 or more, particularly 1.25 or more The molar ratio Li/Me may be 1.5 or less, particularly 1.45 or less.

In the lithium transition metal composite oxide, a molar ratio Ni/Me of Ni to Me may be 0.2 or more, particularly 0.25 or more. The molar ratio Ni/Me may be less than 0.5, particularly 0.4 or less.

In the lithium transition metal composite oxide, a molar ratio Mn/Me of Mn to Me may be more than 0.5, particularly 0.6 or more. The molar ratio Mn/Me may be 0.8 or less, particularly 0.75 or less.

As the transition metal (Me), Co having a molar ratio Co/Me of less than 0.05 may be contained. In this case, the molar ratio Co/Me may be 0.03 or less, 0.01 or less, or 0.

In an embodiment of the present invention, in the lithium transition metal composite oxide, a half-value width for the diffraction peak of a (003) plane at the Miller index hkl in the X-ray diffraction measurement using the CuKa ray may be 0.175° or less, and a ratio of a half-value width for the diffraction peak of the (101) plane to the half-value width for the diffraction peak of the (003) plane may be 1.40 or less.

In an embodiment of the present invention, a BET specific surface area of the positive active material may be 8 m²/g or less.

An aluminum compound may be present on at least a surface of the lithium transition metal composite oxide.

Another embodiment of the present invention is a positive electrode for a nonaqueous electrolyte secondary battery containing the positive active material.

Still another embodiment of the present invention is a nonaqueous electrolyte secondary battery including the positive electrode, a negative electrode, and a nonaqueous electrolyte.

The positive active material for a nonaqueous electrolyte secondary battery according to an embodiment of the present invention (hereinafter, referred to as the "positive active material according to the present embodiment") described above, the positive electrode for a nonaqueous electrolyte secondary battery according to another embodiment of the present invention (hereinafter, referred to as the "positive electrode according to the present embodiment"), and the nonaqueous electrolyte secondary battery according to still another embodiment of the present invention (hereinafter, referred to as the "nonaqueous electrolyte secondary battery according to the present embodiment") will be described in detail below.

### (Lithium transition metal composite oxide)

The lithium transition metal composite oxide (hereinafter, referred to as the "lithium transition metal composite oxide according to the present embodiment") contained in the positive active material according to the present embodiment is typically a "lithium-excess-type" active material represented by a composition formula Li_{1+α}Me_{1-α}O₂ (a > 0, Me: transition metal containing Ni and Mn). In order to obtain a nonaqueous electrolyte secondary battery having a high energy density, the molar ratio Li/Me of Li to the transition metal (Me), that is, (1 + a)/(1 - a) is preferably 1.2 or more, more preferably 1.25 or more, and particularly preferably 1.3 or more. (1 + α)/(1 - a) is preferably 1.5 or less, more preferably 1.45 or less, and particularly preferably 1.4 or less.

Since Ni has an action of improving the discharge capacity of the active material, the molar ratio Ni/Me of Ni to the transition metal (Me) is preferably 0.2 or more, more preferably 0.25 or more, and particularly preferably 0.3 or more. The molar ratio Ni/Me is preferably less than 0.5, more preferably 0.45 or less, and particularly preferably 0.4 or less.

The molar ratio Mn/Me of Mn to the transition metal (Me) is preferably more than 0.5, more preferably 0.6 or more, and particularly preferably 0.65 or more from the viewpoint of material cost and in order to improve charge-discharge cycle performance. The molar ratio Mn/Me is preferably 0.8 or less, more preferably 0.75 or less, and particularly preferably 0.7 or less.

Although Co has an action of enhancing electron conductivity of active material particles and improving high rate discharge performance, Co is an optional element that is preferably smaller in terms of charge-discharge cycle performance and economic efficiency. The molar ratio Co/Me of Co to the transition metal (Me) is preferably less than 0.05, and may be 0.03 or less, 0.01 or less, or 0. When a raw material containing Ni is used, Co may be contained as an impurity.

The lithium transition metal composite oxide according to the present embodiment may contain a small amount of other metals such as alkali metals such as Na and K, alkaline earth metals such as Mg and Ca, and transition metals typified by 3d transition metals such as Fe as long as the characteristics of the lithium transition metal composite oxide are not significantly impaired.

Particles of the lithium transition metal composite oxide according to the present embodiment preferably have a BET specific surface area of 8 m²/g or less.

The BET specific surface area is measured under the following conditions. Using the positive active material particles as a measurement sample, an adsorbed amount (m²) of nitrogen on the measurement sample is determined by one point method using a specific surface area measurement apparatus manufactured by YUASA IONICS Co., Ltd. (trade name: MONOSORB). An amount of the measurement sample loaded is 0.5 g ± 0.01 g. Preheating is performed at 120°C for 15 minutes. Cooling is performed using liquid nitrogen, and a nitrogen gas adsorption amount in a cooling process is measured. A value obtained by dividing the measured adsorption amount (m²) by an active material mass (g) is taken as the BET specific surface area (m²/g).

The lithium transition metal composite oxide can be synthesized by mixing a compound containing a transition metal element and a lithium compound and firing the mixture. In the X-ray diffraction pattern of a powder after synthesis (before charge and discharge) using the CuKa ray, in addition to diffraction peaks at 2θ = 18.6 ± 1°, 36.7 ± 1°, and 44.0 ± 1° derived from a crystal system attributed to the space group R3-m, a superlattice peak (peak found in a monoclinic crystal of Li₂MnO₃ type) derived from a crystal system attributed to a space group C2/m, C2/c, or P3₁12 is confirmed at 2θ = 20.8 ± 1°. However, when charge in which a region where a potential change is relatively flat with respect to an amount of charge appears is performed at least once in a positive electrode potential range of 4.5 V (vs.Li/Li⁺) or more, symmetry of crystal changes with desorption of Li in the crystal, so that this superlattice peak disappears. The space group C2/m, C2/c, or P3₁12 is a crystal structure model in which atom positions at 3a, 3b and 6c sites in the space group R3-m are subdivided.

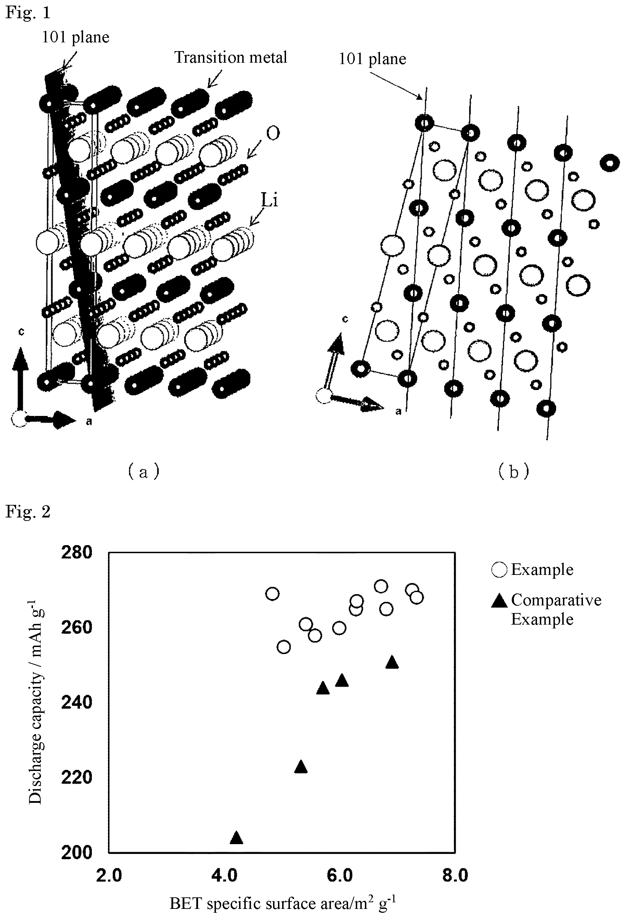

The diffraction peaks at 2θ = 18.6 ± 1°, 36.7 ± 1°, and 44.0 ± 1° on the diagram of the X-ray diffraction pattern attributed to the space group R3-m are indexed to the (003) plane, the (101) plane, and the (104) plane at the Miller index hkl, respectively. The (101) plane of the LiMeO₂-type crystal structure attributed to the space group R-3m is a plane obliquely crossing a transition metal atom of each transition metal layer as shown in Figs. 1(a) and 1(b). Incidentally, "R3-m" should otherwise be denoted by affixing a bar "-" above "3" of "R3m".

### <X-ray diffraction measurement>

In the present specification, X-ray diffraction measurement is performed under the following conditions. A ray source is CuKa, an acceleration voltage is 30 kV, and an acceleration current is 15 mA. A sampling width is 0.01 deg, a scanning speed is 1.0 deg/min, a divergence slit width is 0.625 deg, a light receiving slit is open, and a scattering slit width is 8.0 mm.

### <Method of preparing sample to be subjected to X-ray diffraction measurement>

A sample to be subjected to the X-ray diffraction measurement for the positive active material according to the present embodiment and the active material contained in the positive electrode included in the nonaqueous electrolyte secondary battery according to the present embodiment is prepared according to the following procedure and conditions.

The sample to be subjected to the measurement is subjected to the measurement as it is if the sample is an active material powder before preparation of the positive electrode. When a sample is collected from a positive electrode taken out from a disassembled battery, before the battery is disassembled, constant current discharge is performed up to a battery voltage, which is the lower limit of a designated voltage, at a current value (A) that is 1/10 of a nominal capacity (Ah) of the battery, and the battery is brought to a discharge state. As a result of disassembly, if the battery uses a metal lithium electrode as the negative electrode, the additional operation described below is not performed, and a positive composite collected from the positive electrode is to be measured. If the battery does not use a metal lithium electrode as the negative electrode, in order to accurately control a positive electrode potential, after the battery is disassembled to take out the electrode, a battery using a metal lithium electrode as the counter electrode is assembled. Constant current discharge is performed at a current value of 10 mA per 1 g of the positive composite until the potential of the positive electrode becomes 2.0 V (vs. Li/Li⁺), and the battery is adjusted to the discharge state and then disassembled again. In the taken out positive electrode, a nonaqueous electrolyte attached is sufficiently washed using dimethyl carbonate, and the positive electrode is dried at room temperature for 24 hours. Then, the composite on an aluminum foil current collector is collected. The collected composite is lightly loosened in an agate mortar, placed in a sample holder for X-ray diffraction measurement, and subjected to measurement. The operations from the disassembly to re-disassembly of the battery, and the washing and drying operations of the positive electrode plate are performed in an argon atmosphere having a dew point of -60°C or lower.

Conventionally, the discharge capacity of the positive active material has a high correlation with the specific surface area, and when the specific surface area is high, a large discharge capacity is generally obtained. However, in the "lithium-excess-type" active material, when the composition is within a fixed range, even if the active material has the same specific surface area, an equivalent discharge capacity is not always shown. Fig. 2 is a graph showing a relationship between the BET specific surface area of the positive active material according to Examples and Comparative Examples described later and the discharge capacity at 0.1 C.

The specific surface area of the active material is correlated with a crystallite diameter of the lithium transition metal composite oxide used for the active material, and, in addition, the crystallite diameter is an index related to the half-value width for each diffraction peak of the X-ray diffraction pattern. That is, as the half-value width of each diffraction peak of the lithium transition metal composite oxide is larger, the crystallite diameter is smaller and the specific surface area of the active material is larger. However, on the other hand, the half-value width for each diffraction peak also includes information on crystal distortion in each indexed plane direction.

Thus, the present inventors synthesized the lithium transition metal composite oxide contained in the positive active material under various conditions within a fixed composition range, and examined a relation between the half-value width for each diffraction peak and the initial efficiency and the discharge capacity.

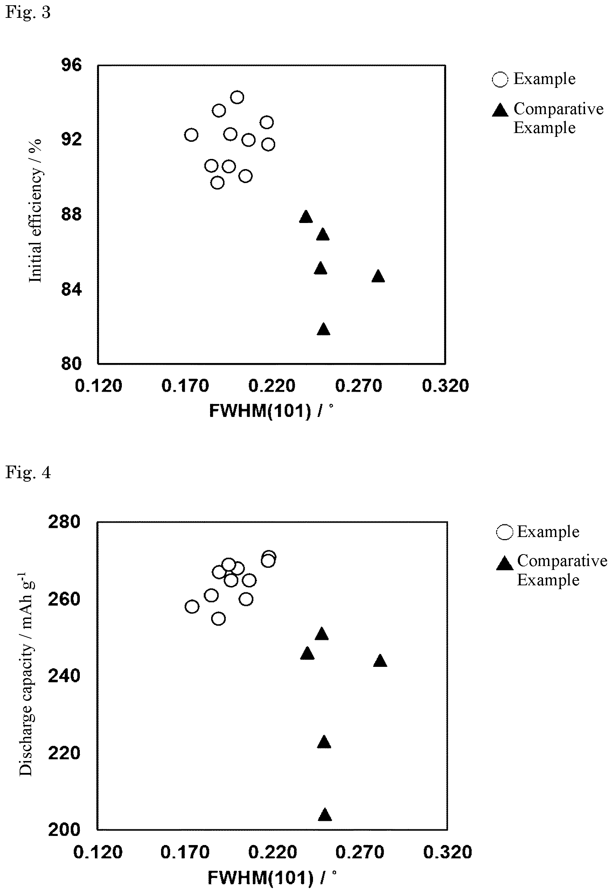

Fig. 3 is a graph showing a relationship between the half-value width (hereinafter, referred to as "FWHM (101)") for the diffraction peak of the (101) plane of the lithium transition metal composite oxide and the initial efficiency. From Fig. 3, it was found that when the FWHM (101) was 0.22° or less, the initial efficiency was excellent.

Fig. 4 is a graph showing a relationship between the FWHM (101) and the discharge capacity. From Fig. 4, it was found that when the FWHM (101) was 0.22° or less, a positive active material having a large discharge capacity was obtained.

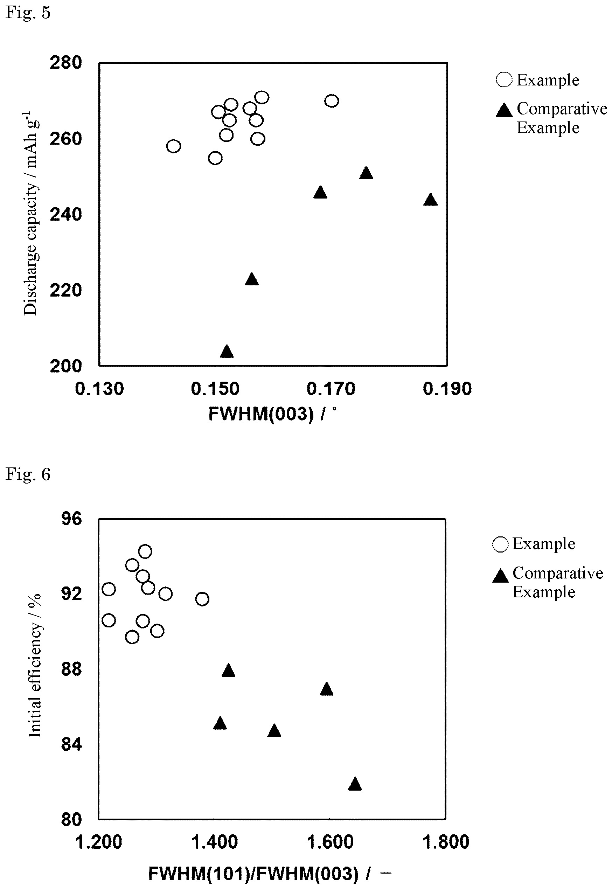

Fig. 5 is a graph showing a relationship between the half-value width (hereinafter, referred to as "FWHM (003)") for the diffraction peak of the (003) plane of the lithium transition metal composite oxide and the discharge capacity. From Fig. 5, it was found that even when the FWHM (003) was equivalent, the discharge capacity varied, and there was no clear correlation.

The FWHM (003) includes information on a degree of crystal growth in a direction perpendicular to the (003) plane and a variation (hereinafter, also referred to as "distortion of the (003) plane") in a lattice spacing of the (003) plane. Hereinafter, consideration will be given from the viewpoint of the distortion of the (003) plane.

When distortion occurs and the lattice spacing is locally narrow (in Bragg's reflection formula; 2dsinθ = nλ, d is small), a peak is observed on a slightly high angle side in the X-ray diffraction diagram, and when the lattice spacing is locally wide (in the Bragg's reflection formula, d is large), a peak is observed on a slightly low angle side in the X-ray diffraction diagram. That is, it is considered that the fact that the FWHM (003) is not too large means that the lattice spacing of the (003) plane is nearly uniform to some extent (distortion in the crystal is small), and there is little hindrance to lithium ions extracted/inserted along the ab plane. Therefore, the FWHM (003) of the lithium transition metal composite oxide according to the present embodiment is preferably 0.175° or less. The FWHM (003) may be 0.170° or less, or 0.160° or less.

However, as shown in Fig. 5, a large discharge capacity cannot always be obtained only by a small FWHM (003).

It is presumed that the technical meaning of specifying the FWHM (101) is due to the following mechanism of action. Since the FWHM (101) includes information on the degree of crystal growth in a direction perpendicular to the (101) plane and a variation (hereinafter, also referred to as "distortion of the (101) plane") in a lattice spacing of the (101) plane, the small FWHM (101) means that the crystal growth in the direction perpendicular to the (101) plane is progressing (crystallite diameter is large) or the distortion of the (101) plane is small. The (101) plane of the LiMeO₂-type crystal structure attributed to the space group R-3 m is a plane obliquely crossing the transition metal atom of each transition metal layer (Figs. 1(a) and 1(b)), and it is considered that when the crystallite diameter is large, a lithium ion diffusion distance in the crystal becomes long, so that the separation/insertion of lithium ions is inhibited and the discharge capacity decreases. However, according to Examples and Comparative Examples described later, the discharge capacity is rather improved.

Therefore, it is presumed that the fact that the FWHM (101) is small and the distortion of the (101) plane is small contributes to the ease of the separation/insertion of lithium ions, and the reason is that a "lithium-excess-type" active material having high initial efficiency and a large discharge capacity is obtained.

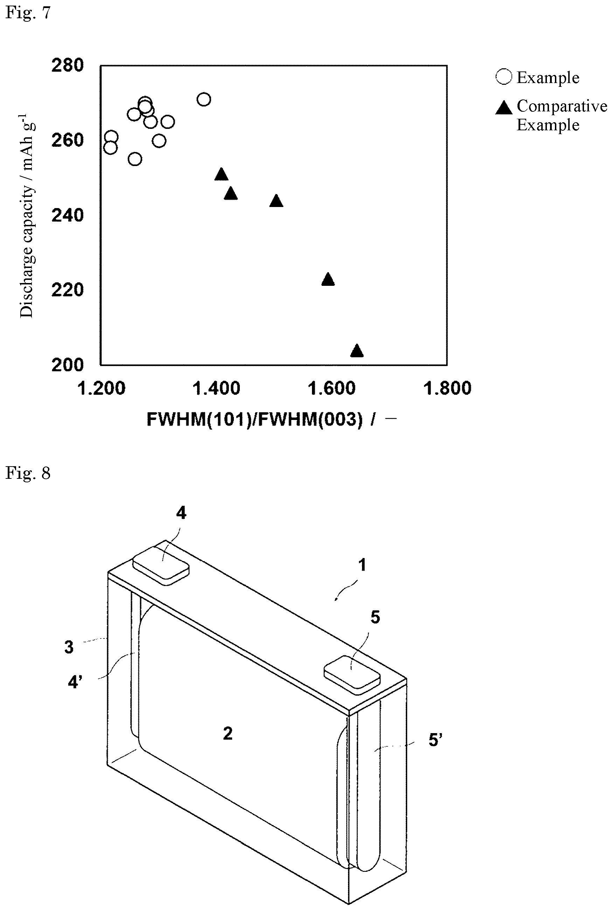

Next, attention was paid to a ratio (hereinafter, referred to as "FWHM (101)/FWHM (003)") of the FWHM (101) to the FWHM (003). Fig. 6 is a graph showing a relationship between FWHM (101)/FWHM (003) and the initial efficiency, and Fig. 7 is a graph showing a relationship between FWHM (101)/FWHM (003) and the discharge capacity. It was found that when FWHM (101)/FWHM (003) was 1.40 or less, a large discharge capacity and excellent initial efficiency were obtained. The mechanism of action is presumed as follows.

As described above, it is preferable that the FWHM (003) is not too large. However, if the FWHM (003) is too small, it is considered that efficiency of separation/insertion of lithium ions decreases, and the initial efficiency and the discharge capacity decrease.

Therefore, the fact that FWHM (101)/FWHM (003) is equal to or less than a fixed value means that the FWHM (003) is in a suitable range, that is, the distortion of the (003) plane is suitable, and the FWHM (101) is small, that is, the distortion of the (101) plane is small; therefore, it is inferred that the initial efficiency and the discharge capacity can be increased. FWHM (101)/FWHM (003) may be 1.35 or less, or 1.30 or less.

From Examples and Comparative Examples described later, it has been found that the positive active material containing the lithium transition metal composite oxide in which the FWHM (101) is 0.22° or less and the half-value width (hereinafter, referred to as "FWHM (104") for the diffraction peak of the (104) plane is 0.27° or less has high initial efficiency, a large discharge capacity, and a high potential retention rate. The FWHM (104) may be 0.265° or less, or 0.26° or less.

The FWHM (104) is a value related to the crystallite diameter in a perpendicular direction of the (104) plane and the distortion of the crystal in a direction perpendicular to the (104) plane. On the other hand, the FWHM (003) is a value related to the crystallite diameter in the direction perpendicular to the (003) plane and the distortion of the crystal of the (003) plane, and the potential retention rate is not related to the FWHM (003). Therefore, it can be determined that the potential retention rate related to the FWHM (104) is a value related to the distortion of the crystal in the direction perpendicular to the (104) plane.

The fact that the value of the FWHM (104) of the lithium transition metal composite oxide is small and the distortion of the crystal in the direction perpendicular to the (104) plane is small indicates that alignment of the transition metal and lithium is regularly maintained, and cation mixing in which the transition metal is randomly replaced by lithium sites hardly occurs. Therefore, it is presumed that when the lithium transition metal composite oxide in which the FWHM (104) is 0.27° or less is used for the positive active material, a structural change associated with charge-discharge hardly occurs, and therefore, a decrease in potential associated with a charge-discharge cycle is suppressed, so that a nonaqueous electrolyte secondary battery exhibiting a high potential retention rate is obtained. However, when the FWHM (104) decreases, the potential retention rate tends not to be excellent, and thus the FWHM (104) is preferably 0.21° or more and more preferably more than 0.22° in order to make an effect of suppressing the potential decrease excellent.

### (Method of producing precursor)

The lithium transition metal composite oxide contained in the positive active material according to the present embodiment can be produced using a precursor obtained by supplying a solution containing Ni and Mn and an alkali solution to a reaction tank and precipitating a transition metal compound containing Ni and Mn while stirring the inside of the reaction tank.

The precursor can be prepared by supplying a solution containing a transition metal at a predetermined concentration and the alkali solution to the reaction tank equipped with a stirrer, filtering an overflowed suspension, washing an obtained precipitate with water, and drying the precipitate. The overflowed suspension may be continuously concentrated in a concentration tank and returned to the reaction tank.

It is preferable that the solution containing the transition metal is prepared by weighing and mixing a transition metal compound so as to have a desired composition of the lithium transition metal composite oxide.

A nickel source used in the solution containing the transition metal is not particularly limited, and examples thereof include nickel sulfate, nickel oxide, nickel hydroxide, nickel nitrate, nickel carbonate, nickel chloride, nickel iodide, and metal nickel, and nickel sulfate is preferable.

Similarly, a cobalt source is not particularly limited, and examples thereof include cobalt sulfate, cobalt oxide, cobalt hydroxide, cobalt nitrate, cobalt carbonate, cobalt chloride, cobalt iodide, and metal cobalt, and cobalt sulfate is preferable.

Similarly, a manganese source is not particularly limited, and examples thereof include manganese sulfate, manganese oxide, manganese hydroxide, manganese nitrate, manganese carbonate, manganese chloride, manganese iodide, and metallic manganese, and manganese sulfate is preferable.

A rotation speed of the stirrer depends on a scale of the reaction tank, but is preferably adjusted to 200 to 1000 rpm, for example, in a reaction tank containing about 30 L of a reaction liquid in Examples described later. By selecting a suitable range of stirring speeds, the concentration of the transition metal for each particle of the precursor is made uniform. When the concentration of the transition metal (Me: Ni and Mn) for each particle of the precursor is made uniform, domains of a LiMeO₂ phase and a Li₂MnO₃ phase of the "lithium-excess-type" active material obtained from the precursor become small, and the distortion of the entire crystal becomes small. In particular, since the distortion of the crystal of the ab plane affected by the transition metal is reduced, the FWHM (101) and FWHM (101)/FWHM (003) can be reduced. Since Li₂MnO₃ is easily activated and the distortion of the crystal is small, it is presumed that the effect of obtaining a positive active material having high initial efficiency and a large discharge capacity is exhibited.

When the stirring speed is too slow, the concentration of the transition metal for each particle of the precursor tends to be non-uniform, and when the stirring speed is too fast, a fine powder is generated, so that handling of the powder tends to be difficult.

The rotation speed is more preferably 250 to 700 rpm. The rotation speed is still more preferably 300 to 600 rpm.

The temperature in the reaction tank is preferably adjusted to 20 to 60°C. By selecting a suitable range of temperatures and controlling solubility to a suitable value, the concentration of the transition metal can be easily made uniform. As the concentration of the transition metal becomes uniform, the domains of the LiMeO₂ phase and the Li₂MnO₃ phase become small, and the distortion of the crystal becomes small, so that it is presumed that the same effect as described above is exhibited.

When the temperature in the reaction tank is too low, the solubility decreases, a deposition rate increases, the concentration of the transition metal tends to be non-uniform, and the distortion of the crystal increases. If the temperature is too high, while the solubility increases, the deposition rate decreases and a reaction time increases, so that the temperature deviates from a practical temperature in production. A more preferable temperature is 30°C to 60°C. A still more preferable temperature is 35°C to 55°C.

The precursor can be a transition metal carbonate precursor using, as a carbonate aqueous solution, an alkali aqueous solution supplied to the reaction tank together with an aqueous solution of a transition metal compound. The carbonate aqueous solution is preferably a sodium carbonate aqueous solution, a potassium carbonate aqueous solution, a lithium carbonate aqueous solution, or the like.

A preferable pH of the reaction tank at the time of producing the precursor is 10 or less, and more preferably 7 to 9. The lower the pH, the higher the solubility of Ni and Mn, so that the composition of Ni and Mn of the precursor tends to be uniform.

In an ordinary precursor preparation step, a complexing agent such as ammonia or an ammonium salt is often poured into the reaction tank together with an aqueous alkali solution. However, when the complexing agent is poured, Ni forms a complex, so that there is a difference in solubility between Ni and Mn, and therefore, there is a possibility that the composition of Ni and Mn of the precursor is difficult to be uniform. Therefore, no complexing agent is used in Examples described later.

### (Method of producing positive active material)

The lithium transition metal composite oxide contained in the positive active material according to the present embodiment can be produced by mixing the precursor produced by the above method with a lithium compound and firing the mixture.

The firing temperature is preferably 840°C or more and 1000°C or less. When the firing temperature is 840°C or more, a desired crystal is obtained. When the firing temperature is 1000°C or less, excessive crystal growth can be suppressed, and a large energy density can be obtained. The firing temperature is more preferably 850°C to 970°C.

The mixing treatment of the lithium compound and a particle powder of the precursor may be performed by either a dry method or a wet method as long as these materials can be uniformly mixed with each other.

When the precursor used in this embodiment is a carbonate, it is preferable to perform sufficient ventilation during firing so that the carbonate is decomposed and does not remain.

The lithium compound used in this embodiment is not particularly limited, and various lithium salts can be used. Examples thereof include lithium hydroxide monohydrate, lithium nitrate, lithium carbonate, lithium acetate, lithium bromide, lithium chloride, lithium citrate, lithium fluoride, lithium iodide, lithium lactate, lithium oxalate, lithium phosphate, lithium pyruvate, lithium sulfate, and lithium oxide, and lithium carbonate is preferable.

The lithium transition metal composite oxide obtained by firing is preferably a powder having an average secondary particle size of 100 pm or less, and particularly preferably a powder having an average secondary particle size of 15 pm or less for the purpose of improving high power characteristics of a nonaqueous electrolyte battery. For obtaining a powder of a predetermined particle size, a method of preparing a precursor of a predetermined size and a method using a pulverizer or a classifier, and the like can be adopted. As a pulverizer, for example, a mortar, a ball mill, a sand mill, a vibratory ball mill, a planetary ball mill, a jet mill, a counter jet mill, a whirling airflow type jet mill, a sieve or the like is used. At the time of pulverization, wet type pulverization in the presence of water or an organic solvent such as hexane can be also employed. A classification method is not particularly limited. A sieve or an air classifying apparatus may be employed based on the necessity both in dry manner and in wet manner.

The surfaces of the primary particles and/or secondary particles of the lithium transition metal composite oxide obtained by firing may be coated with an aluminum compound and/or dissolved. Due to the presence of the aluminum compound on a particle surface, a direct contact between the lithium transition metal composite oxide and the nonaqueous electrolyte is prevented, deterioration such as a structural change associated with charge-discharge can be suppressed, and an energy density retention rate can be improved.

In order to coat with the aluminum compound, a method can be adopted in which lithium transition metal composite oxide particles are deflocculated in pure water, the aluminum compound is added dropwise with stirring, the mixture is then filtered and washed with water, and dried at about 80°C to 120°C, and the resultant is fired in an electric furnace at about 300°C to 500°C for about 5 hours under air circulation.

The aluminum compound can be dissolved by appropriately adjusting conditions such as a drying temperature and a firing temperature when the aluminum compound is coated.

The aluminum compound is not particularly limited, and examples thereof include aluminum sulfate, aluminum oxide, aluminum hydroxide, aluminum nitrate, aluminum carbonate, aluminum chloride, aluminum iodide, sodium aluminate, and metallic aluminum, and aluminum sulfate is preferable.

When a surface of the lithium transition metal composite oxide particles is coated with the aluminum compound, the aluminum compound is preferably 0.1 wt% to 0.7 wt%, and more preferably 0.2 wt% to 0.6 wt% with respect to the lithium transition metal composite oxide, so that the effect of further improving the energy density retention rate and the effect of improving the initial efficiency are more sufficiently exhibited.

### (Positive electrode)

A composite obtained by mixing the positive active material according to the present embodiment with a material such as a conductive agent, a binder, a thickener, or a filler as another optional component is applied to a current collector or pressure-bonded to the current collector, whereby the positive electrode according to the present embodiment can be produced.

The conductive agent is not limited as long as it is an electron conductive material which does not cause an adverse effect on the battery characteristics. Usually, one or a mixture of conductive materials such as natural graphite (scaly graphite, flaky graphite, earthy graphite, and the like), artificial graphite, carbon black, acetylene black, ketjen black, carbon whisker, carbon fibers, metal (copper, nickel, aluminum, silver, gold, and the like) powder, metal fibers, and conductive ceramic materials can be contained as the conductive agent.

Among these, acetylene black is preferable as the conductive agent from the viewpoints of electron conductivity and coatability. The amount of the conductive agent to be added is preferably 0.1% by weight to 50% by weight and particularly preferably 0.5% by weight to 30% by weight based on a total weight of the positive electrode. Especially, use of acetylene black after pulverized into ultrafine particles with a diameter of 0.1 to 0.5 µm is preferable since the amount of carbon to be needed can be lessened. In order to sufficiently mix the conductive agent with the positive active material, a powder mixing apparatus such as a V-type mixing apparatus, an S-type mixing apparatus, an attriter, a ball mill, or a planetary ball mill can be used in a dry manner or a wet manner.

As the binder, usually, thermoplastic resins such as polytetrafluoroethylene (PTFE), polyvinylidene fluoride (PVDF), polyethylene and polypropylene, and polymers having rubber elasticity, such as ethylene-propylene-diene terpolymers (EPDM), sulfonated EPDM, styrene butadiene rubber (SBR) and fluororubber can be used alone or as a mixture of two or more thereof. The amount of the binder to be added is preferably 1 to 50% by weight and particularly preferably 2 to 30% by weight based on the total weight of the positive electrode.

The filler is not limited as long as it is a material that does not adversely affect the battery performance. Usually, olefin polymers such as polypropylene and polyethylene, amorphous silica, alumina, zeolites, glass, carbon, and the like are used. The amount of the filler to be added is preferably 30% by weight or less based on the total weight of the positive electrode.

The positive electrode is preferably produced by mixing a composite, obtained by kneading the positive active material and the above-described optional material, with an organic solvent, such as N-methylpyrrolidone or toluene, or water, thereafter, applying or pressure-bonding the obtained mixture solution onto a current collector such as an aluminum foil, and carrying out heat treatment at a temperature of about 50°C to 250°C for about 2 hours to form a composite layer. With respect to the above-described application method, it is preferable, for example, to carry out application in an arbitrary thickness and an arbitrary shape by using a technique such as roller coating with an applicator roller, screen coating, doctor blade coating, spin coating, or a bar coater; however the method is not limited to these examples.

### (Nonaqueous electrolyte secondary battery)

The nonaqueous electrolyte secondary battery according to the present embodiment includes the positive electrode, the negative electrode, and the nonaqueous electrolyte. Hereinafter, each element of the nonaqueous electrolyte secondary battery will be described in detail.

### (Negative electrode)

A negative electrode material of the battery according to the present embodiment is not limited, and any negative electrode material may be selected as long as it can release or store lithium ions. Examples thereof include lithium composite oxides such as lithium titanate having a spinel crystal structure typified by Li[Li_{1/3}Ti_{5/3}]O₄, metal lithium, lithium alloys (metal lithium-containing alloys such as lithium-silicon, lithium-aluminum, lithium-lead, lithium-tin, lithium-aluminum-tin, lithium-gallium, and wood's alloy), lithium oxides such as silicon oxide, and alloys and carbon materials (e.g. graphite, hard carbon, lower temperature calcined carbon, amorphous carbon) capable of absorbing and releasing lithium.

The negative electrode can be formed by applying or pressure-bonding a composite, obtained by mixing a powder of the negative active material with the above-described materials such as a conductive agent, a binder, a thickener, and a filler, which are optional components similar to those of the positive electrode, onto a current collector such as a copper foil or a nickel foil.

### (Nonaqueous electrolyte)

The nonaqueous electrolyte used for a nonaqueous electrolyte secondary battery according to the present embodiment is not limited, and those that are generally proposed to be used in lithium batteries and the like can be used.

Examples of a nonaqueous solvent to be used for the nonaqueous electrolyte include cyclic carbonic acid esters such as propylene carbonate, ethylene carbonate, fluoroethylene carbonate, butylene carbonate, chloroethylene carbonate, and vinylene carbonate; cyclic esters such as γ-butyrolactone, and γ-valerolactone; chain carbonates such as dimethyl carbonate, diethyl carbonate, ethyl methyl carbonate, and trifluoroethyl methyl carbonate; chain esters such as methyl formate, methyl acetate, and methyl butyrate; tetrahydrofuran and derivatives thereof; ethers such as 1,3-dioxane, 1,4-dioxane, 1,2-dimethoxyethane, 1,4-dibutoxyethane, and methyl diglyme; nitriles such as acetonitrile, and benzonitrile; dioxolane and derivatives thereof; ethylene sulfide, sulfolane, sultone and derivatives thereof, and these compounds may be used alone or two or more of them may be used in the form of a mixture; however, the nonaqueous solvent is not limited to these examples.

Examples of an electrolyte salt to be used for the nonaqueous electrolyte include inorganic ion salts containing one of lithium (Li), sodium (Na), and potassium (K) such as LiClO₄, LiBF₄, LiAsF₆, LiPF₆, LiSCN, LiBr, LiI, Li₂SO₄ Li₂B₁₀Cl₁₀, NaClO₄, NaI, NaSCN, NaBr, KClO₄, and KSCN and organic ion salts such as LiCF₃SO₃, LiN(CF₃SO₂)₂, LiN(C₂F₅SO₂)₂, LiN(CF₃SO₂)(C₄F₉SO₂), LiC(CF₃SO₂)₃, LiC(C₂F₅SO₂)₃, (CH₃)₄NBF₄, (CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate, (C₂H₅)₄N-phthalate, lithium stearyl sulfonate, lithium octylsulfonate, and lithium dodecylbenzenesulfonate, and these ionic compounds may be used alone or two or more of them may be used in the form of a mixture.

Further, use of LiPF₆ or LiBF₄ and a lithium salt having a perfluoroalkyl group such as LiN(C₂F₅SO₂)₂ in the form of a mixture can further lower the viscosity of the electrolyte. Therefore, the low temperature characteristics can be further improved, and self discharge can be suppressed. Consequently, use of such a mixture is more desirable.

A room temperature molten salt or an ionic liquid may be used as the nonaqueous electrolyte.

The concentration of the electrolyte salt in the nonaqueous electrolyte is preferably 0.1 mol/L to 5 mol/L and more preferably 0.5 mol/L to 2.5 mol/L in order to obtain a nonaqueous electrolyte secondary battery having high characteristics.

### (Separator)

As a separator, porous membranes, nonwoven fabrics, and the like showing excellent high rate discharge performance are preferably used alone or in combination. Examples of a material constituting a separator for a nonaqueous electrolyte battery include polyolefin resins typified by polyethylene and polypropylene; polyester resins typified by poly(ethylene terephthalate) and poly(butylene terephthalate); poly(vinylidene fluoride), vinylidene fluoride-hexafluoropropylene copolymers, vinylidene fluoride-perfluorovinyl ether copolymers, vinylidene fluoride-tetrafluoroethylene copolymers, vinylidene fluoride-trifluoroethylene copolymers, vinylidene fluoride-fluoroethylene copolymers, vinylidene fluoride-hexafluoroacetone copolymers, vinylidene fluoride-ethylene copolymers, vinylidene fluoride-propylene copolymers, vinylidene fluoride-trifluoropropylene copolymers, vinylidene fluoride-tetrafluoroethylene-hexafluoropropylene copolymers, and vinylidene fluoride-ethylene-tetrafluoroethylene copolymers.

Porosity of the separator is preferably 98% by volume or less from the viewpoint of strength. The porosity is preferably 20% by volume or more from the viewpoint of charge-discharge characteristics.

Further, as the separator, a polymer gel comprised of, for example, acrylonitrile, ethylene oxide, propylene oxide, methyl methacrylate, vinyl acetate, vinylpyrrolidone, a polymer such as poly(vinylidene fluoride) with an electrolyte may be used. Use of the nonaqueous electrolyte in the gel state as described above is preferable in terms of an effect of preventing liquid leakage.

Further, use of the porous membranes or nonwoven fabrics as described above in combination with the polymer gel for the separator is preferable because of improvement of a liquid retention property of the electrolyte. That is, a film is formed by coating the surface and fine pore wall faces of a polyethylene finely porous membrane with a solvophilic polymer in a thickness of several pm or thinner, and the electrolyte is maintained in the fine pores of the film, and thus causing gelation of the solvophilic polymer.

Examples of the solvophilic polymer include, in addition to poly(vinylidene fluoride), polymers obtained by crosslinking acrylate monomers having ethylene oxide groups, ester groups, or the like, epoxy monomers, monomers having isocyanato groups, and the like. These monomers can be crosslinked by radiating electron beams (EB) or adding a radical initiator and heating or radiating ultraviolet (UV) rays.

### (Other components)

Other components of a battery includes a terminal, an insulating plate, a battery case and the like, and for these parts, heretofore used parts may be used as-is.

### (Configuration of nonaqueous electrolyte secondary battery)

Fig. 8 shows an external perspective view of the nonaqueous electrolyte secondary battery according to the present embodiment. Fig. 8 is a view showing an inside of a case in a perspective manner. In the nonaqueous electrolyte secondary battery 1 shown in Fig. 8, an electrode group 2 is housed in a battery case 3. The electrode group 2 is formed by winding a positive electrode, including a positive active material, and a negative electrode, including a negative active material, with a separator interposed between the electrodes. The positive electrode is electrically connected to a positive electrode terminal 4 through a positive electrode lead 4', and the negative electrode is electrically connected to a negative electrode terminal 5 through a negative electrode lead 5'.

The shape of the nonaqueous electrolyte secondary battery is not particularly limited. As shown in Fig. 8, a prismatic battery (rectangular battery) may be used, and in addition, examples thereof include cylindrical batteries and flat batteries.

### (Configuration of energy storage apparatus)

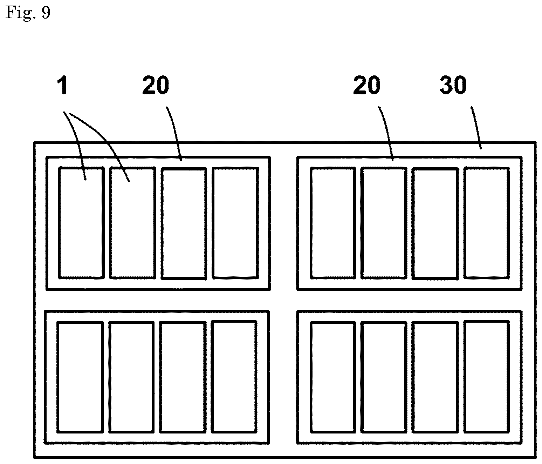

The present embodiment can also be implemented as an energy storage apparatus including a plurality of the nonaqueous electrolyte secondary batteries as described above. Fig. 9 shows an embodiment of an energy storage apparatus. In Fig. 9, an energy storage apparatus 30 includes a plurality of energy storage units 20. Each of the energy storage units 20 includes a plurality of the nonaqueous electrolyte secondary batteries 1. The energy storage apparatus 30 can be mounted as a power source for an automobile such as an electric vehicle (EV), a hybrid vehicle (HEV), a plug-in hybrid vehicle (PHEV), or the like.

### EXAMPLES

In the following, the present invention will be described in detail with reference to representative Examples and Comparative Examples of the present invention. However, the present invention is not limited to these Examples.

### <Example 1>

### (Precursor preparation step)

Nickel sulfate and manganese sulfate were weighed so that a molar ratio of nickel and manganese was Ni : Mn = 31.7 : 68.3, and then mixed with water to obtain a mixed solution. A 1.3 mol/L sodium carbonate aqueous solution was provided. 30 L of water was placed in a closed type reaction tank, and the temperature was maintained at 40°C while carbon dioxide gas was circulated at 0.1 L/min. A sodium carbonate aqueous solution was added to adjust the pH to 8.5. The mixed solution and the sodium carbonate aqueous solution were continuously added dropwise to the reaction tank while being stirred at 400 rpm. After 48 hours, an overflowed suspension was collected, filtered, and washed with water. After washing with water, the resultant was dried at 120°C overnight to obtain a powder of a coprecipitation precursor.

### (Firing step)

A lithium carbonate powder was weighed so that a ratio (molar ratio) of lithium to an amount of transition metal in the coprecipitation precursor was Li/(Ni + Mn) = 1.38, and sufficiently mixed with the coprecipitation precursor. The resultant mixture was fired at 900°C for 5 hours in an oxidizing atmosphere using an electric furnace to obtain a lithium transition metal composite oxide of Example 1.

### <Example 2>

A lithium transition metal composite oxide of Example 2 was obtained in the same manner as in Example 1 except that in the precursor preparation step, nickel and manganese were weighed so that the molar ratio of nickel and manganese was Ni : Mn = 31.8 : 68.2, and mixed with water, the temperature of the reaction tank was changed to 35°C, the stirring speed was changed to 600 rpm, and in the firing step, Li/(Ni + Mn) was changed to 1.37.

### <Example 3>

A lithium transition metal composite oxide of Example 3 was obtained in the same manner as in Example 2 except that in the precursor preparation step, the stirring speed was changed to 700 rpm.

### <Example 4>

A lithium transition metal composite oxide of Example 4 was obtained in the same manner as in Example 1 except that in the precursor preparation step, nickel and manganese were weighed so that the molar ratio of nickel and manganese was Ni : Mn = 31.5 : 68.5, and mixed with water, the temperature of the reaction tank was changed to 45°C, and the stirring speed was changed to 500 rpm.

### <Example 5>

A lithium transition metal composite oxide of Example 5 was obtained in the same manner as in Example 4 except that Li/(Ni + Mn) was changed to 1.39 in the firing step.

### <Example 6>

A lithium transition metal composite oxide of Example 6 was obtained in the same manner as in Example 4 except that in the precursor preparation step, nickel and manganese were weighed so that the molar ratio of nickel and manganese was Ni : Mn = 31.6 : 68.4, and mixed with water, the temperature of the reaction tank was changed to 20°C, the stirring speed was changed to 250 rpm, and in the firing step, Li/(Ni + Mn) was changed to 1.36.

### <Example 7>

A lithium transition metal composite oxide of Example 7 was obtained in the same manner as in Example 4 except that Li/(Ni + Mn) was changed to 1.36 in the firing step.

### <Example 8>

A lithium transition metal composite oxide of Example 8 was obtained in the same manner as in Example 7 except that in the precursor preparation step, the temperature of the reaction tank was changed to 30°C.

### <Example 9>

A lithium transition metal composite oxide of Example 9 was obtained in the same manner as in Example 7 except that in the precursor preparation step, the temperature of the reaction tank was changed to 55°C, and the stirring speed was changed to 350 rpm.

### <Example 10>

A lithium transition metal composite oxide of Example 10 was obtained in the same manner as in Example 7 except that in the precursor preparation step, the temperature of the reaction tank was changed to 50°C, and the stirring speed was changed to 200 rpm.

### <Example 11>

A lithium transition metal composite oxide of Example 11 was obtained in the same manner as in Example 1 except that in the precursor preparation step, nickel sulfate, cobalt sulfate, and manganese sulfate were weighed so that a molar ratio of nickel, cobalt, and manganese was Ni : Co : Mn = 32.8 : 0.2 : 67.0, and then mixed with water to obtain a mixed solution, the temperature of the reaction tank was changed to 60°C, the stirring speed was changed to 1000 rpm, and in the firing step, Li/(Ni + Co + Mn) was changed to 1.35.

### <Comparative Example 1>

A lithium transition metal composite oxide of Comparative Example 1 was obtained in the same manner as in Example 2 except that in the precursor preparation step, nickel and manganese were weighed so that the molar ratio of nickel and manganese was Ni : Mn = 31.4:68.6, and mixed with water, and the temperature of the reaction tank was changed to 15°C.

### <Comparative Example 2>

A lithium transition metal composite oxide of Comparative Example 2 was obtained in the same manner as in Comparative Example 1 except that Li/(Ni + Mn) was changed to 1.39 in the firing step.

### <Comparative Example 3>

A lithium transition metal composite oxide of Comparative Example 3 was obtained in the same manner as in Comparative Example 1 except that in the precursor preparation step, nickel, cobalt, and manganese were weighed so that the molar ratio of nickel, cobalt, and manganese was Ni : Co : Mn = 34.7 : 0.8 : 64.5, and mixed with water, the stirring speed was changed to 100 rpm, and in the firing step, Li/(Ni + Co + Mn) was changed to 1.35.

### <Comparative Example 4>

A lithium transition metal composite oxide of Comparative Example 4 was obtained in the same manner as in Comparative Example 1 except that in the precursor preparation step, nickel and manganese were weighed so that the molar ratio of nickel and manganese was Ni : Mn = 32.3 : 67.7, and mixed with water, the stirring speed was changed to 150 rpm, and in the firing step, Li/(Ni + Mn) was changed to 1.35.

### <Comparative Example 5>

A lithium transition metal composite oxide of Comparative Example 5 was obtained in the same manner as in Comparative Example 3 except that in the precursor preparation step, nickel, cobalt, and manganese were weighed so that the molar ratio of nickel, cobalt, and manganese was Ni : Co : Mn = 34.0 : 0.9 : 65.1, and mixed with water, and the temperature of the reaction tank was changed to 25°C.

For the lithium transition metal composite oxide of Examples 1 to 11 and Comparative Examples 1 to 5, measurement of the BET specific surface area and X-ray diffraction measurement using a CuKa ray were performed under the above measurement conditions.

In the X-ray diffraction measurement, it was confirmed that all the samples had an X-ray diffraction pattern attributable to the space group R3-m and had an α-NaFeO₂ structure. A superlattice peak specific to the lithium-excess-type was observed in a range of 20 to 22°.

The half-value width "FWHM (101)" of the (101) plane, the half-value width "FWHM (104)" of the (104) plane, and the half-value width "FWHM (003)" of the (003) plane at the time of attribution to the space group R3-m were recorded using attached software. The ratio "FWHM (101)/FWHM (003)" of the half-value width of the (101) plane to the half-value width of the (003) plane was calculated

### (Production of nonaqueous electrolyte secondary battery)

A nonaqueous electrolyte secondary battery was produced by the following procedure using the powder of the positive active material (active material) of each of the above Examples and Comparative Examples.

A coating paste was prepared in which the active material, acetylene black (AB) and polyvinylidene fluoride (PVdF) were kneaded at a ratio of 90:5:5 in terms of a mass ratio and dispersed with N-methylpyrrolidone as a dispersion medium. The coating paste was applied to one surface of an aluminum foil current collector having a thickness of 20 pm, dried, and then pressed to produce a positive electrode plate. The mass of the positive composite applied per fixed area and the thickness after pressing were equalized so that test conditions were the same among the nonaqueous electrolyte secondary batteries of all Examples and Comparative Examples.

For the purpose of accurately observing the independent behavior of a positive electrode, metallic lithium was brought into close contact with a nickel foil current collector and used for a counter electrode, i.e. a negative electrode. Here, a sufficient amount of metallic lithium was placed on the negative electrode so that the capacity of the nonaqueous electrolyte secondary battery was not limited by the negative electrode.

As a nonaqueous electrolyte (electrolyte solution), a solution obtained by dissolving LiPF₆ in a fluorinated ester carbonate solvent in a concentration of 1 mol/L was used. As a separator, a microporous membrane made of polypropylene, the surface of which was modified with polyacrylate, was used. As an outer case, a metal resin composite film made of polyethylene terephthalate (15 µm)/aluminum foil (50 µm)/metal-adhesive polypropylene film (50 pm) was used. The electrode was stored such that open ends of a positive electrode terminal and a negative electrode terminal were externally exposed. Fusion margins with inner surfaces of the aforementioned metal resin composite films facing each other were airtightly sealed except a portion forming an electrolyte solution filling hole, and the electrolyte solution was injected, followed by sealing the electrolyte solution filling hole.

### (Charge-discharge test)

A charge-discharge test was performed at 25°C under the following conditions. Charge was constant current constant voltage charge with a current of 0.1 C and an end voltage of 4.7 V, and the condition of the end-of-charge was set at a time point at which the current value was reduced to 0.05 C. Discharge was constant current discharge with a current of 0.1 C and an end voltage of 2.0 V, and the charge and discharge was performed twice. Here, a rest process of 10 minutes was provided after each of charge and discharge. A value obtained by dividing the discharge capacity at the first time by the charge capacity at the first time was recorded as "initial efficiency (%)". The discharge capacity (mAh) at the second time was divided by the mass of the active material contained in the positive electrode and recorded as "0.1 C discharge capacity (mAh/g)".

### (Measurement of potential retention rate)

Subsequently, 30 cycles of charge and discharge were performed under the same conditions as in the charge-discharge test described above except that a charge current and a discharge current were 1/3 C, and the condition of the end-of-charge was set at a time point at which the current value was reduced to 0.1 C, and a ratio of an average discharge potential at the first cycle and an average discharge potential at the 30th cycle was recorded as the "potential retention rate (%)".

Table 1 and Figs. 2 to 7 show the above results.

**[Table 1]**

| | Ni/Me | Co/Me | Mn/Me | Li/Me | Specific surface area [m²/g] | FWHM(101) [°] | FWHM(003) [°] | FWHM(101)/ FWHM(003) [-] | FWHM(104) [°] | Initial efficiency [%] | 0.1 C discharge capacity [mAh/g] | Potential retention rate [%] |
|---|---|---|---|---|---|---|---|---|---|---|---|---|
| Example 1 | 0.317 | 0 | 0.683 | 1.38 | 6.7 | 0.2178 | 0.1580 | 1.378 | 0.2592 | 91.8 | 271 | 97.0 |
| Example 2 | 0.318 | 0 | 0.682 | 1.37 | 6.0 | 0.2046 | 0.1573 | 1.301 | 0.2386 | 90.1 | 260 | 96.9 |
| Example 3 | 0.318 | 0 | 0.682 | 1.37 | 5.0 | 0.1886 | 0.1499 | 1.258 | 0.2339 | 89.7 | 255 | 96.6 |
| Example 4 | 0.315 | 0 | 0.685 | 1.38 | 6.8 | 0.2066 | 0.1570 | 1.316 | 0.2450 | 92.0 | 265 | 97.0 |
| Example 5 | 0.315 | 0 | 0.685 | 1.39 | 5.4 | 0.1849 | 0.1519 | 1.217 | 0.2190 | 90.6 | 261 | 96.8 |
| Example 6 | 0.316 | 0 | 0.684 | 1.36 | 7.2 | 0.2171 | 0.1701 | 1.276 | 0.2581 | 92.9 | 270 | 98.0 |
| Example 7 | 0.315 | 0 | 0.685 | 1.36 | 6.3 | 0.1959 | 0.1524 | 1.285 | 0.2456 | 92.3 | 265 | 98.0 |
| Example 8 | 0.315 | 0 | 0.685 | 1.36 | 5.6 | 0.1737 | 0.1428 | 1.216 | 0.2280 | 92.3 | 258 | 97.9 |
| Example 9 | 0.315 | 0 | 0.685 | 1.36 | 7.3 | 0.1997 | 0.1560 | 1.280 | 0.2488 | 94.3 | 268 | 98.0 |
| Example 10 | 0.315 | 0 | 0.685 | 1.36 | 6.3 | 0.1892 | 0.1505 | 1.257 | 0.2273 | 93.6 | 267 | 98.0 |
| Example 11 | 0.328 | 0.002 | 0.670 | 1.35 | 4.8 | 0.1948 | 0.1527 | 1.276 | 0.2421 | 90.6 | 269 | 98.0 |
| Comparative Example 1 | 0.314 | 0 | 0.686 | 1.37 | 5.3 | 0.2493 | 0.1564 | 1.594 | 0.2984 | 86.9 | 223 | 96.1 |
| Comparative Example 2 | 0.314 | 0 | 0.686 | 1.39 | 4.2 | 0.2498 | 0.1520 | 1.643 | 0.2897 | 81.9 | 204 | 96.4 |
| Comparative Example 3 | 0.347 | 0.008 | 0.645 | 1.35 | 5.7 | 0.2814 | 0.1871 | 1.504 | 0.3133 | 84.7 | 244 | 96.2 |
| Comparative Example 4 | 0.323 | 0 | 0.677 | 1.35 | 6.0 | 0.2397 | 0.1682 | 1.425 | 0.2827 | 87.9 | 246 | 96.3 |
| Comparative Example 5 | 0.340 | 0.009 | 0.651 | 1.35 | 6.9 | 0.2481 | 0.1760 | 1.410 | 0.2805 | 85.2 | 251 | 96.2 |

The positive active materials of all of the above Examples and Comparative Examples contain the lithium transition metal composite oxide satisfying the composition of the "lithium-excess-type" active material according to the present embodiment; however, the specific surface area and crystallinity differ depending on preparation conditions (reaction temperature, stirring conditions, etc.) of the precursor.

Table 1 shows that the nonaqueous electrolyte secondary batteries using the positive active materials of Examples 1 to 11 have higher initial efficiency than the nonaqueous electrolyte secondary batteries using the positive active materials of Comparative Examples 1 to 5. In these Examples, the discharge capacity was also larger than that in Comparative Examples.

Figs. 2 and 5 show that the values of the BET specific surface area and the FWHM (003) do not necessarily correlate with the magnitude of the discharge capacity.

On the other hand, it can be seen from Figs. 3, 4, 6, and 7 that the value of the FWHM (101) and the value of FWHM (101)/FWHM (003) have a strong correlation with the improvement in the initial efficiency and the discharge capacity.

### INDUSTRIAL APPLICABILITY

According to the present invention, it is possible to provide a "lithium-excess-type" positive active material having high initial efficiency and a large discharge capacity, and thus a secondary battery using the positive active material is useful as a rechargeable battery for vehicles such as a hybrid electric vehicle (HEV), an electric vehicle (EV), and a plug-in hybrid vehicle (PHV), in addition to portable devices such as a mobile phone and a personal computer.

### DESCRIPTION OF REFERENCE SIGNS

1: Nonaqueous electrolyte secondary battery
2: Electrode group
3: Battery case
4: Positive electrode terminal
4': Positive electrode lead
5: Negative electrode terminal
5': Negative electrode lead
20: Energy storage unit
30: Energy storage apparatus

## Claims

1. A positive active material for a nonaqueous electrolyte secondary battery containing a lithium transition metal composite oxide,
wherein the lithium transition metal composite oxide has an a-NaFeO₂ structure,
a molar ratio Li/Me of Li to a transition metal (Me) is 1 < Li/Me,
Ni and Mn are contained as the transition metal (Me), an X-ray diffraction pattern attributable to a space group R3-m is included, and a half-value width for a diffraction peak of a (101) plane at a Miller index hkl in X-ray diffraction measurement using a CuKa ray is 0.22° or less.

2. The positive active material for a nonaqueous electrolyte secondary battery according to claim 1, wherein the molar ratio Li/Me is 1.2 or more.

3. The positive active material for a nonaqueous electrolyte secondary battery according to claim 1 or 2, wherein the molar ratio Li/Me is 1.25 or more.

4. The positive active material for a nonaqueous electrolyte secondary battery according to any one of claims 1 to 3, wherein the molar ratio Li/Me is 1.5 or less.

5. The positive active material for a nonaqueous electrolyte secondary battery according to claim 4, wherein the molar ratio Li/Me is 1.45 or less.

6. The positive active material for a nonaqueous electrolyte secondary battery according to any one of claims 1 to 5, wherein in the lithium transition metal composite oxide, a molar ratio Ni/Me of Ni to Me is 0.2 or more.

7. The positive active material for a nonaqueous electrolyte secondary battery according to claim 6, wherein the molar ratio Ni/Me is 0.25 or more.

8. The positive active material for a nonaqueous electrolyte secondary battery according to any one of claims 1 to 6, wherein the molar ratio Ni/Me is less than 0.5.

9. The positive active material for a nonaqueous electrolyte secondary battery according to claim 8, wherein the molar ratio Ni/Me is 0.4 or less.

10. The positive active material for a nonaqueous electrolyte secondary battery according to any one of claims 1 to 9, wherein in the lithium transition metal composite oxide, a molar ratio Mn/Me of Mn to Me is more than 0.5.

11. The positive active material for a nonaqueous electrolyte secondary battery according to claim 10, wherein the molar ratio Mn/Me is 0.6 or more.

12. The positive active material for a nonaqueous electrolyte secondary battery according to any one of claims 1 to 11, wherein the molar ratio Mn/Me is 0.8 or less.

13. The positive active material for a nonaqueous electrolyte secondary battery according to claim 11, wherein the molar ratio Mn/Me is 0.75 or less.

14. The positive active material for a nonaqueous electrolyte secondary battery according to any one of claims 1 to 13, wherein the lithium transition metal composite oxide further contains Co as the transition metal (Me) in an amount such that a molar ratio Co/Me of Co to Me is less than 0.05.

15. The positive active material for a nonaqueous electrolyte secondary battery according to any one of claims 1 to 14, wherein in the lithium transition metal composite oxide, the half-value width for the diffraction peak of a (003) plane at the Miller index hkl in X-ray diffraction measurement using the CuKa ray is 0.175° or less.

16. The positive active material for a nonaqueous electrolyte secondary battery according to claim 15, wherein in the lithium transition metal composite oxide, a ratio of the half-value width for the diffraction peak of the (101) plane to the half-value width for the diffraction peak of the (003) plane is 1.40 or less.

17. The positive active material for a nonaqueous electrolyte secondary battery according to any one of claims 1 to 16, wherein a BET specific surface area is 8 m²/g or less.

18. The positive active material for a nonaqueous electrolyte secondary battery according to any one of claims 1 to 17, wherein an aluminum compound is present on at least a surface of the lithium transition metal composite oxide.

19. A positive electrode for a nonaqueous electrolyte secondary battery containing the positive active material according to any one of claims 1 to 18.

20. A nonaqueous electrolyte secondary battery comprising the positive electrode according to claim 19, a negative electrode, and a nonaqueous electrolyte.
